Europäisches Patentamt

European Patent Office

Office européen des brevets

(19)

(11) Publication number: 0 390 397
A2

# (12) EUROPEAN PATENT APPLICATION

(21) Application number: 90302959.3

(22) Date of filing: 20.03.90

(51) Int. Cl.5: C03C 1/00, C03B 8/02,
C03C 3/00, C03B 19/06

(30) Priority: 21.03.89 US 326317

(43) Date of publication of application:
03.10.90 Bulletin 90/40

(84) Designated Contracting States:
DE FR GB IT

(71) Applicant: LITTON SYSTEMS, INC.
360 North Crescent Drive
Beverly Hills, California 90218-4867(US)

(72) Inventor: De Lait, Frans G.A.
10505 Melvin Avenue
Northridge, CA 91326(US)

Inventor: Goldman, Arnold E.
26018 C Allizia Cyn. Dr.
Calabasas, CA 91302(US)
Inventor: James, Thomas W.
9749 Reseda Blvd. No. 12
Northridge, CA 91302(US)
Inventor: Welsbie, Roland A.
2288 Stow Street
Simi Valley, CA 93603(US)

(74) Representative: Godsill, John Kenneth et al
Haseltine Lake & Co. Hazlitt House 28
Southampton Buildings Chancery Lane
London WC2A 1AT(GB)

(54) A method of making alumina-silica glass and other powders.

(57) A method is disclosed for fabricating near-net-shape betaquartz lithia-alumina-silica (LAS) or alumina-silica glass-ceramic parts. Gels are processed to a powder of controlled form and morphology which may be further formed into a near-net-shape solid and densified by heat treatment at relatively low temperature. Either of two basic methods is used to process a starting wet gel to a usable (activated) powder. In the first method, the gel by dried in a recirculating air oven which includes a means for moisture to escape, the dried gel is milled and particles smaller than a predetermined size are kept, the retained particles are calcined according to a predetermined schedule of temperatures and times, the calcined particles are wet milled in a deionized aqueous suspension, the milled suspension is dried, the dried powder is dry-milled if necessary to reduce the agglomeration size of particles, and hydroxyl groups are removed from the de-agglomerated powder particles. In the second method, the starting gel is supercritically dried in a reaction vessel capable of being vented; this single step replaces the first three steps of the first method, and the remaining steps are the same. After being processed to usable condition the powder may be formed to near net shapes by suspension or pressing techniques, preferably by cold isostatic pressing. The green part is converted to a dense body at low temperatures, typically a couple of hundred degrees Celsius above the glass transition temperature. The treatment incorporates initial drying, sintering, nucleation, and crystal growth all in one schedule to yield a glass-ceramic which is 70 to 95 percent crystalline by volume, mainly a high quartz solid solution with very low expansivity and helium permeability.

## FIG. I

```
┌──────────────────┐
│  MAKE WET GEL    │
└──────────────────┘
         │
         ▼
┌──────────────────┐
│    DRY GEL       │
└──────────────────┘
         │
         ▼
┌────────────────────────────┐
│   MILL DRIED GEL; RETAIN   │
│  PARTICLES SMALLER THAN A  │
│    PREDETERMINED SIZE      │
└────────────────────────────┘
         │
         ▼
┌────────────────────────────┐
│  CALCINE REMAINING PARTICLES │
│ ACCORDING TO SPECIFIED SCHEDULE │
└────────────────────────────┘
         │
         ▼
┌────────────────────────────┐
│  WET-MILL A LIQUID SUSPENSION │
│     OF CALCINED POWDER     │
└────────────────────────────┘
         │
         ▼
┌────────────────────────────┐
│  DRY THE WET-MILLED POWDER │
└────────────────────────────┘
         │
         ▼
┌────────────────────────────┐
│  REDUCE PARTICLE AGGLOMERATE │
│     SIZE IF NECESSARY      │
└────────────────────────────┘
         │
         ▼
┌────────────────────────────┐
│  REMOVE WATER AND HYDROXYLS │
│    FROM POWDER PARTICLES   │
└────────────────────────────┘
```

## A method of making alumina-silica glass and other powders

The invention relates to methods of making alumina-silica glass and other powers and is applicable to the field of solid near-net-shape parts fabrication, and, more particularly, to the preparation of dense near-net-shape glass-ceramic ring laser gyro parts and to the products of those methods.

Certain critically important parts required for ring laser gyro (RLG) manufacturing, such as the frame, cathode, and support rings must be made from a material which not only has a low thermal expansivity but also a very low helium gas permeability. Transparency is a requirement of secondary importance which aids inspection during quality control because of the fairly complicated machining procedures involved in fabricating ring laser gyro parts. Materials which are currently used are glass-ceramics of the lithia-alumina-silica ($Li_2O$-$Al_2O_3$-$SiO_2$) family. Examples are Zerodur, Cervit, and other commercially available glass-ceramics made using conventional melting techniques.

These materials are provided to the RLG manufacturer in the form of cast rectangular slabs from which the various RLG parts are made by time-consuming cutting, drilling, grinding, and polishing operations. The casting of $Li_2O$-$Al_2O_3$-$SiO_2$ glass-ceramics into dimensionally-controlled parts is difficult, if not impossible, because of the very viscous nature of these materials in molten form. Contamination is also a major problem because of the oxidation byproducts which are formed during melting and casting.

The major impetus for finding alternative near-net-shape manufacturing methods using $Li_2O$-$Al_2O_3$-$SiO_2$ glass-ceramics is the prohibitively high labor cost in machining, particularly for volume production, compared to the relatively low cost of the materials themselves. Also, the elimination of contamination problems would be highly desirable.

A process of deriving lithia-alumina-silica (LAS) or alumina-silica compositions from sol-gels is disclosed in U.S. Patent Application Serial Number 106,964, by de Laat et al., filed October 14, 1987, which is a continuation of U.S. Patent Application Serial Number 829,376, filed February 13, 1986, and is assigned to the assignee of the present application. A "sol" is a fluid colloidal suspension of a solid in a liquid. A "gel" is a semirigid colloidal dispersion of a solid in a liquid. Sol-gel methods involve the conversion of a sol to a gel.

The methods disclosed in the latter de Laat application include forming a slurry of sol-gel produced glass powder with an organic binder system, casting the slurry into tape form, cutting the tape into pieces of desired shape and size, pressing two or more of these pieces together to form a molded shape or block, making whatever surface features or passages in the molded shape or block that are desired, debinderizing the molded shape or block, and sintering the molded shape or block to form a final product. Products of these methods consist of a plurality of fused layers of tape-cast sol-gel glass powders including binder material.

Present methods of preparing near-net-shape glass-ceramic parts include such conventional solidification techniques as high-temperature melting and casting. Other near-net-shape solidification techniques for making beta-quartz lithia-alumina-silica (LAS) glass-ceramic parts (e.g., glass-ceramic injection molding, tape casting, and slip casting) usually rely on additional ingredients such as temporary, removable binders or slip agents.

It would be a great advance in the art of fabricating intricate glass-ceramic ring laser gyro parts if there were developed a near-net-shape method that obviated the time-consuming and expensive steps of cutting, drilling, grinding, and polishing that are presently required. It would be particularly advantageous if such a method could be carried out at relatively low temperatures to avoid the viscous flow difficulties and contamination problems associated with molten glass-ceramic materials.

According to one aspect of the invention, a method is disclosed for fabricating near-net-shape beta-quartz lithia-alumina-silica (LAS) or alumina-silica glass-ceramic parts. Gels of lithia-alumina-silica or alumina-silica are first processed to a powder of controlled form and morphology. The powder may be further formed into a near-net-shape solid and densified by heat treatment at relatively low temperature to full density (zero porosity). In addition, crystallization may be controlled during heat treatment, as in the case of glass ceramics.

The gel may be formed by hydrolysis and polymerization of metal organics, alkoxides in particular, or metal salts in the presence of a solvent (or solvents), water, and an acidic or basic catalyst. The details of this sol-gel process to produce a proper gel for use in further processing are described, for example, in Patent Application Serial Number 106,964, by de Laat et al., filed October 14, 1987, and assigned to the assignee of the present application, which is referred to above.

The gel is processed to a usable (activated) powder by either of two basic methods. In the first method, a fine powder is produced from a starting wet gel by drying the gel in a recirculating air oven which includes a means for moisture to escape, dry milling the dried gel and retaining milled powder particles smaller than a predetermined size, calcining according to a predetermined schedule of temperatures and times the milled powder particles in a furnace with air flowing through, wet milling a suspension of the calcined powder particles in deionized water, drying the suspension of wet-milled powder particles, dry milling the dried powder particles if necessary to reduce the agglomeration size of particles, and removing water and hydroxyl groups from the de-agglomerated powder particles.

In the second processing method, a wet starting gel is supercritically dried in a reaction vessel capable of being vented, a suspension of the friable dried gel is wet-milled in deionized water, the suspension of wet-milled powder particles is dried, the dried powder is dry milled if necessary to reduce the agglomeration size of particles, and hydroxyl groups are removed from the powder particles.

The method is carried out so that the resulting usable powder has a specific area greater than 150 square meters per gram, preferably greater than 200 m²/g. The size of pores in the powder particles is less than 1000 Ångstroms, preferably with a distribution of pore sizes in the range from 25 to 100 Ångstroms. The particle size is less than 10 microns, preferably in the range from 0.01 to 1 micron, and the agglomerate size is less than 420 microns and preferably in the range from 40 to 420 microns. Organic material are removed to less than 1% and preferably to less than 0.1%. The water and hydroxyl content are less than 10% and preferably less than 1%.

After the sol-gel powder has been processed to a usable condition it may be formed to desired shapes, near-net or net shapes by suspension and/or pressing techniques. In well established suspension techniques such as slip casting, slurry casting, centrifugal casting, tape casting, pressure filtration, injection molding, extrusion, and variations thereof, the processed powder is combined with water or another solvent in the liquid phase such as alcohol or other organic solvent to make a suspension, colloidal suspension, or slurry. In addition to the solvent various additives may also be added to the suspension which aid in controlling suspension stability, flocculation, viscosity, pH, plasticity, and other parameters needed for the forming stage. These additives include acids, bases, binders, surfactants, oils, alcohols, and other organic additives. After the suspension has been formed by the aforementioned techniques the solvent and organics must be removed before final densification.

In pressing techniques the processed powder may be pressed into desired shapes, near-net or net shapes by dry pressing, anvil pressing, unidirectional pressing, multidirectional pressing, isostatic pressing, or by combining processes or by combination with the aforementioned suspension processes. In addition additives may be added to the processed powder such as lubricants, binders, water, solvents, and other organic additives to help aid in the forming of the desired shapes.

Cold isostatic pressing (CIPing) is the preferred technique because the part being formed may then be heated directly to obtain a variety of near-net shapes without additional water-removal or debinderizing steps. Cold isostatic pressing of the activated powder may be accomplished without any binder or other additives.

The procedure of cold isostatic pressing may include the following steps: (a) filling a CIP mold or "bag" made of an elastic polymeric material with powder, (b) vibrating and tapping the mold to rearrange and pack the powder, (c) sealing the mold, and (d) applying a predetermined isostatic pressure to the mold for a predetermined length of time. The pressed "green" near-net-shape parts have densities in the range from 50 to 65 per cent of the theoretical density and are ready for subsequent densification and dedication.

The green part is converted to a dense body at low temperatures, typically a couple of hundred degrees Celsius above the glass transition temperature, which is far below the melting point. The conversion occurs at low temperatures because the powder is in the amorphous phase and is active. The heat treatment incorporates initial drying, sintering, nucleation, and crystal growth all in one schedule to yield a glass-ceramic with a 70 to 95 percent crystalline phase, mainly a high quartz solid solution, with a thermal expansion coefficient of less than $1 \times 10^{-7}/°C$.

Other, alternative, aspects of the invention are exemplified in the claims.

For a better understanding of the invention and to show how the same may be carried into effect, reference will now be made, by way of example, to the accompanying drawings, in which:

FIG. 1 a flow diagram of a first method for preparing a thermally crystallizable glass-ceramic lithia-alumina-silica powder from a gel;

FIG. 2 is a graph of temperature versus time describing the calcine heat treatment schedule in powder processing;

FIG. 3 is a dual plot of powder volume versus particle diameter, and cumulative volume versus particle diameter, of the calcined powder after wet ball-milling;

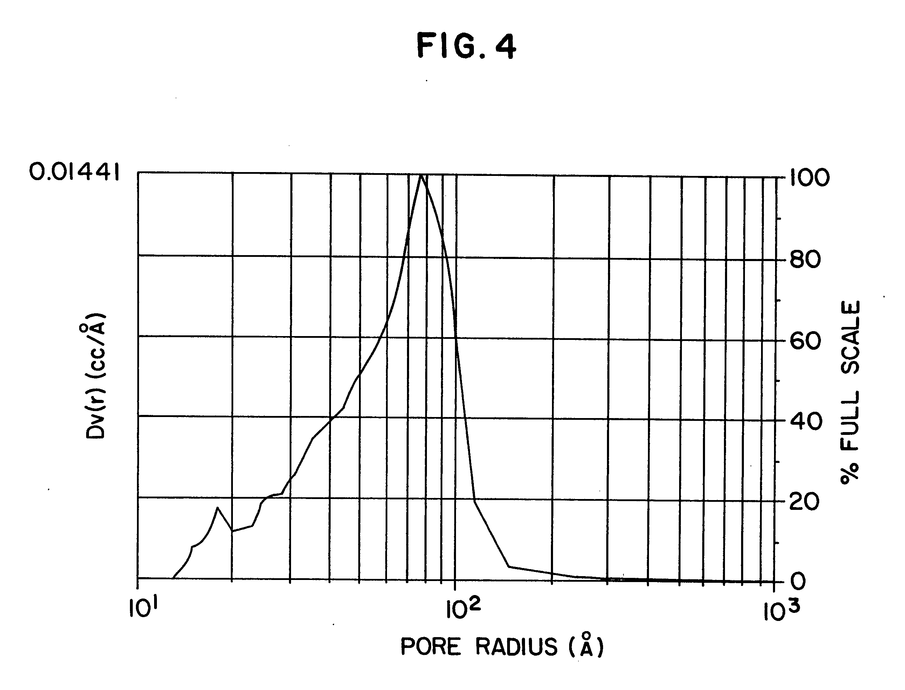

FIG. 4 is a graph of powder particle pore size distribution after deagglomeration of the dry ball-milled powder;

FIG. 5 is a flow diagram of a second method for preparing a thermally crystallizable glass-ceramic lithia-alumina-silica powder from a gel; and

FIG. 6 is a graph of the heat treatment schedule in producing a densified, devitrified, near-net-shape part.

By combining a specific group of precursors such as alkoxysilane with metal alkoxides (or salts) of aluminum, lithium, titanium, magnesium, zirconium, and zinc, bringing them into solution with isopropanol and methanol, and then lowering the pH of the solution by hydrolytic condensation, a gel is formed which upon dehydration becomes a glass powder. After solidification into a glass by either melting/casting or sintering/fusion the powder can be converted by a controlled heat-treatment process into a microcrystalline glass-ceramic of the beta-quartz, aluminum-lithium-silicate type, designated as the NZ material.

Another, very similar, second material derived in the same manner as described above but containing a specific amount of phosphorous pentoxide has been designated as the NZP material. Both the NZ and NZP materials exhibit, as evidenced by x-ray diffraction, similar crystalline-to-amorphous ratios, the same crystal type ($\beta$-eucryptite), crystallite size, and, to a minor degree, crystal byproducts (actually impurities), such as alpha-spodumene, as the conventionally made commercially available products such as Zerodur and Cervit. The NZ and NZP materials have a very low thermal expansivity and low helium gas permeability. One of the most striking properties is the total lack of chemical impurities, such as miscellaneous oxides and trace elements, that are so common with glass-ceramics produced conventionally by melting.

A lithia-alumina-silica wet gel can be made by forming, at room temperature, a mixture of aluminum S-butoxide, titanium isopropoxide, and tetra-ethoxysilane in a 2-propanol solvent used in an amount sufficient to dissolve the reactants completely; separately forming, at room temperature, a mixture of magnesium 2-4 pentanedionate, zirconium 2-4 pentanedionate, and zinc 2-4 pentane in a 2-propanol solvent used in an amount sufficient to dissolve the reactants completely; separately dissolving lithium 2-4 pentanedionate in methanol at room temperature; combining the cures at room temperature; adding, at room temperature, nitric acid to the combined mixtures until the pH of the mixture is adjusted to a value in the range about 3 to about 4; and adding water to the low-pH solution resulting from the previous step to form a gel. Gels belonging to the alumina-silica ($Li_2O$-$Al_2O_3$-$SiO_2$) family can be made by a similar method in which the solution of lithium 2-4 pentanedionate in methanol and its subsequent combination with the other mixtures is omitted.

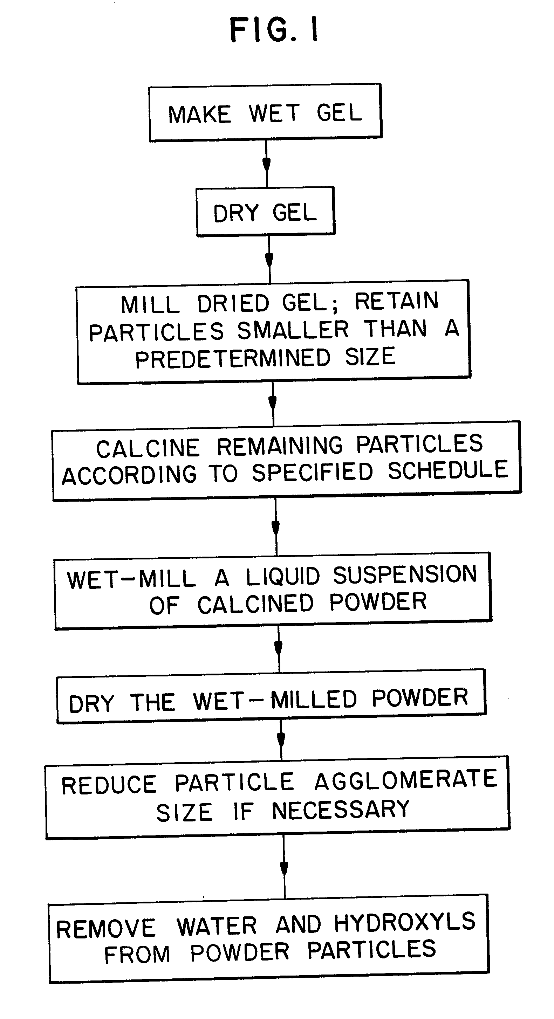

FIG. 1 is a flow diagram of the various steps involved in a first method for preparing a fine, thermally crystallizable glass-ceramic lithia-alumina-silica or alumina-silica powder starting with a wet gel. The first step is to dry the gel in Teflon dishes in a recirculating air oven that includes a means for moisture to escape. The oven temperature is held at approximately 105°C for about 8 hours while the drying takes place.

Next, the dried gel is dry milled; milled powder particles smaller than a predetermined size are retained. Typically, a sieve is used to keep powder particles smaller than 250 microns in diameter.

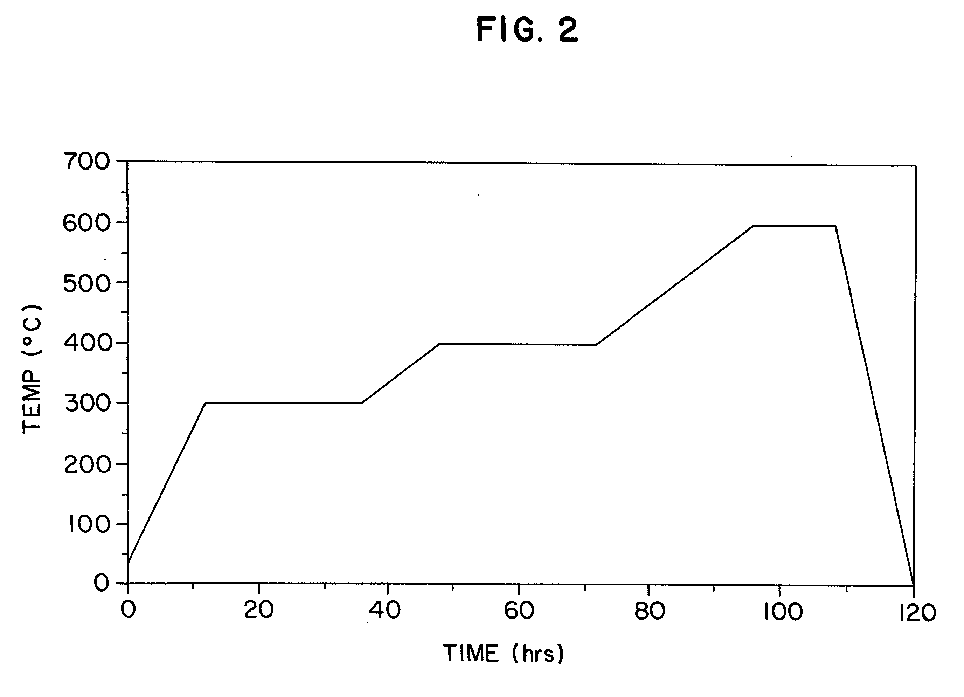

The powder particles from the previous step are then calcined in a furnace with enough airflow through it to replace the air volume at least once per hour. The powder is placed in porcelain dishes or fused silica boats, and the calcining takes place according to a predetermined schedule of temperatures and times. FIG. 2 describes the calcination treatment schedule in the form of a graph of temperature versus time. During this process the powder is preferably stirred to insure uniform calcining.

The calcination schedule comprises linearly increasing the temperature from room temperature to approximately 300°C over a period of about 8 hours; maintaining the 300°C temperature for about 24 hours; linearly increasing the temperature from 300°C to approximately 400°C over a period of about 12 hours; maintaining the 400°C temperature for about 24 hours; linearly increasing the temperature from 400°C to approximately 600°C over a period of about 24 hours; maintaining the 600°C temperature for about 12 hours; and linearly decreasing the temperature from 600°C to approximately room temperature over a period of about 12 hours.

The powder undergoes a color change from light yellow to dark brown and then to a bright white during calcination. The achievement of the white appearance signals the point at which calcination is complete. The temperature during calcination must not be allowed to exceed 650°C, otherwise premature nucleation of crystallites may occur.

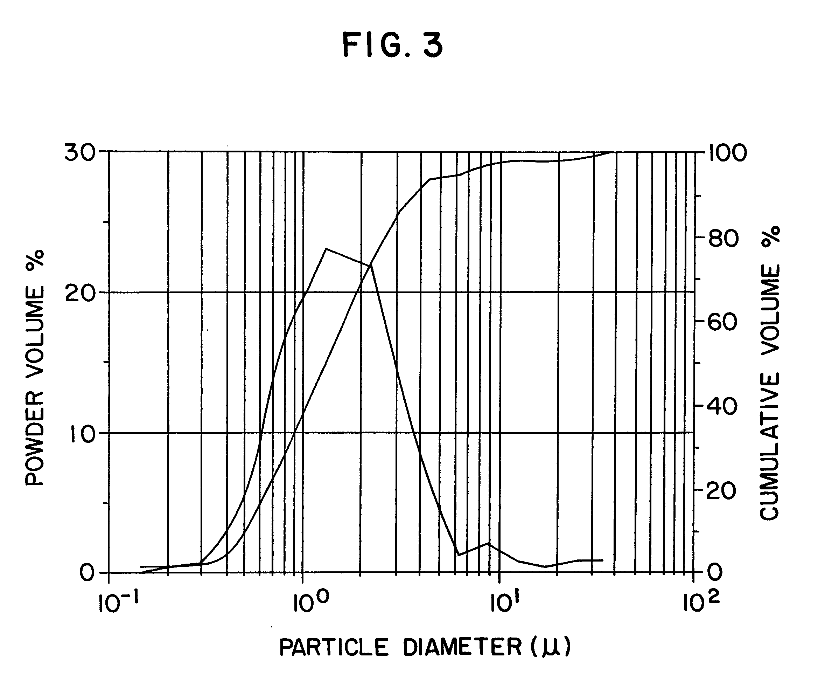

The next step is to wet-mill a suspension of the calcined powder particles in a liquid of predetermined composition. Deionized water is suitable for this purpose, and ball milling with alumina radius grinding media approximately 1 cm in size is appropriate. A typical particle size distribution is shown in FIG. 3, which is a dual semilogarithmic plot of powder volume per unit size range in percent, and cumulative volume in percent, both versus particle diameter in microns.

The suspension of wet-milled powder particles is next dried. Suitable methods of drying the wet-milled powder include spray drying, heating the powder in a Teflon dish, and freeze drying. The spray drying technique involves the use of a spray drier, a heated chamber in which the suspension is blown past a Venturi nozzle to produce controlled agglomeration of the powder particles into spherical agglomerates. Preferably the spray dryer controls should be adjusted to yield particles which have diameters typically in the range from 40 to 420 microns.

Alternatively, the deionized suspension can be dried in Teflon dishes at 100°C and the dried suspension can be dry ball-milled to deagglomerate the agglomerates to sizes typically ranging from 40 to 420 microns.

Similarly, if it is chosen to dry the suspension by freeze drying, the resulting powder is dry ball-milled afterwards to deagglomerate any agglomerates formed down to sizes typically ranging from 40 to 420 microns.

Finally, the powder is heat treated in the range 100 to 600°C to remove water and hydroxyl groups. The final water and hydroxyl content should be less than 10 percent and preferably less than 1 percent.

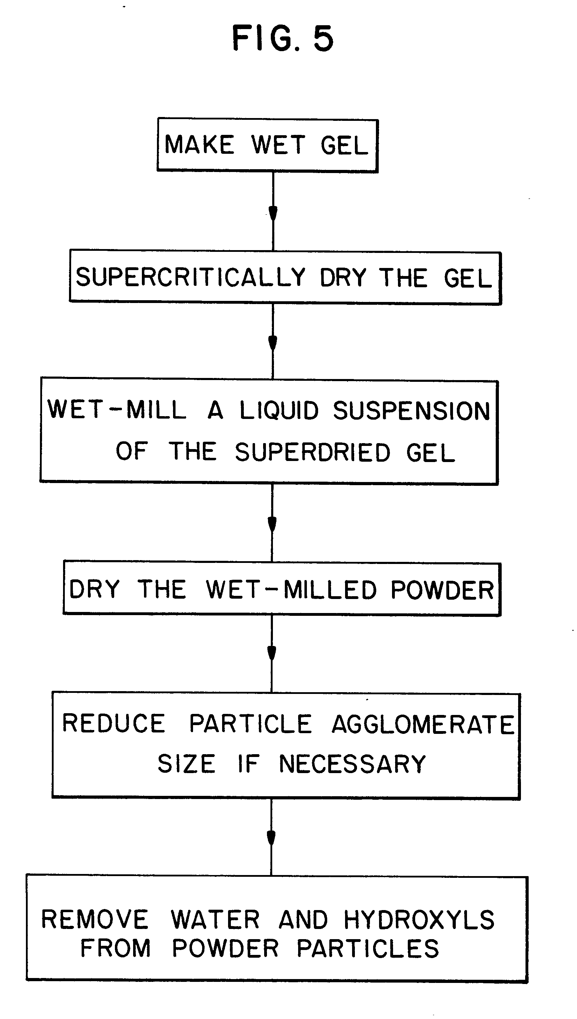

FIG. 5 is a flow diagram of an alternative method of producing a fine, thermally crystallizable glass-ceramic lithia-alumina-silica or alumina-silica powder starting with a wet gel. The alternative method comprises the steps of: making a wet gel; supercritically drying the wet gel in a reaction vessel capable of being vented; wet milling a suspension of the friable supercritically dried gel in a liquid of predetermined composition; drying the suspension of wet-milled powder particles; dry milling the dried powder from the previous step if necessary to reduce the agglomeration of particles; and removing hydroxyl groups from the powder particles resulting after deagglomeration.

In this alternative method the first drying step extracts solvents and water from the wet gel, eliminating the first three steps in the first method discussed above, steps which are the most time consuming. Supercritical drying of the gel comprises placing it inside a reaction vessel filled with argon, increasing the pressure to 3500 psi, increasing the temperature to 440°C, holding conditions for 30 minutes, and then venting the vessel. The subsequent processing steps are the same as those used in the first method described above.

The processed powder resulting from the carrying out of either method can be used to fabricate near-net-shape beta-quartz lithia-alumina-silica (LAS) or alumina-silica glass-ceramic parts according to procedures which will now be described. The powders have controlled form and morphology and may be further formed into a near-net-shape solid and densified by heat treatment at relatively low temperature to full density (zero porosity). In addition, crystallization may be controlled during heat treatment, as in the case of glass ceramics.

The processed powders should have a specific surface area greater than 150 square meters per gram, preferably greater than 200 $m^2/g$. The size of pores in the powder particles should be less than 1000 Ångstroms, preferably with a distribution of pore sizes in the range from 25 to 100 Ångstroms. The particle size should be less than 10 microns, preferably in the range from 0.01 to 1 micron, and the agglomerate size should be less than 420 microns and preferably in the range from 40 to 420 microns. Organic material should be removed to less than 1 percent and preferably to less than 0.1 percent. The water and hydroxyl content should be less than 10 percent and preferably less than 1 percent.

After the sol-gel powder has been processed to a usable condition it may be formed to desired shapes, near-net or net shapes by suspension and/or pressing techniques. In well established suspension techniques such as slip casting, slurry casting, centrifugal casting, tape casting, pressure filtration, injection molding, extrusion, and variations thereof, the processed powder is combined with water or another solvent in the liquid phase such as alcohol or other organic solvent to make a suspension, colloidal suspension, or slurry. In addition to the solvent various additives may also be added to the suspension which aid in controlling suspension stability, flocculation, viscosity, pH, plasticity, and other parameters needed for the forming stage. These additives include acids, bases, binders, surfactants, oils, alcohols, and other organic additives. After the suspension has been formed by the aforementioned techniques the solvent and organics must be removed before final densification.

In pressing techniques the processed powder may be pressed into desired shapes, near-net or net shapes by dry pressing, anvil pressing, unidirectional pressing, multidirectional pressing, isostatic pressing, or by combining processes or by combination with the aforementioned suspension processes. In addition additives may be added to the processed powder such as lubricants, binders, water, solvents, and other organic additives to help aid in the forming of the desired shapes.

Cold isostatic pressing (CIPing) is the preferred technique because the part being formed may then be heated directly to obtain a variety of near-net shapes without additional water-removal or debinderizing steps. Cold isostatic pressing of the activated powder may be accomplished without any binder or other additives.

The procedure of cold isostatic pressing includes the following steps: (a) filling a CIP mold or "bag" made of an elastic polymeric material with powder, (b) vibrating and tapping the mold to rearrange and pack the powder, (c) sealing the mold, and (d) applying a predetermined isostatic pressure to the mold for a predetermined length of time. The pressed "green" near-net-shape parts have densities in the range from 50 to 65 per cent of the theoretical density and are ready for subsequent densification and devitrification.

The CIP "bag" employed in step (a) preferably comprises an elastic polymer material, such as rubber or latex, neoprene or urethane. The packed powder resulting from step (b) should have a density of at least 0.5 grams per cubic centimeter. The predetermined isostatic pressure applied in step (d) is preferably in the range from about 45 to about 60 thousand pounds per square inch, and is held for approximately 2 minutes and reduced slowly over a period of about 30 minutes.

The "green" part is converted to a dense body at low temperatures, typically a couple of hundred degrees Celsius above the glass transition temperature, which is far below the melting point. The conversion at low temperature occurs because the powder is in the amorphous phase and is active. The heat treatment incorporates initial drying, sintering, nucleation, and crystal growth all in one schedule.

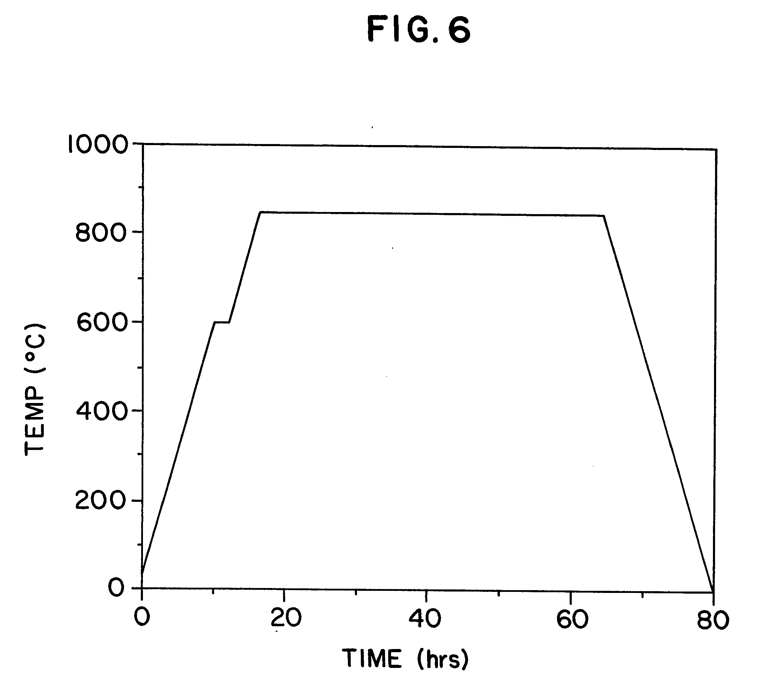

FIG. 6 is a graph of the heat treatment schedule used subsequent to step (d) of the CIP operation to produce a densified devitrified near-net-shape part from the "green" part. First, the temperature is linearly increased from room temperature to approximately 600°C over a period of about 10 hours. The 600°C temperature is maintained for about 2 hours. Next the temperature is linearly increased from 600°C, to approximately 850°C over a period of about 6 hours. The 850°C temperature is maintained for about 50 hours. Finally, the temperature is linearly decreased from 600°C to approximately room temperature over a period of about 16 hours.

The low-temperature sintering procedure described above yields a glass-ceramic part comprising a material with a 70 to 95 percent crystalline phase by volume, mainly a high quartz solid solution. The material has a net thermal expansion coefficient of less than $1 \times 10^{-7}$ /°C and has a helium permeability characterized by a permeability of $7.5 \times 10^8$ atoms/sec-cm-atm or less at 100°C in 100% helium.

The above-described embodiments are furnished as illustrative of the principles of the invention, and are not intended to define the only embodiments possible in accordance with our teaching.

## Claims

1. A method for making an alumina-silica glass powder comprising the following steps:

(1) forming, at room temperature, a mixture of aluminum S-butoxide, titanium isopropoxide and tetraethoxysilane in a 2-propanol solvent used in an amount sufficient to dissolve the reactants completely;

(2) separately forming, at room temperature, a mixture of magnesium 2-4 pentanedionate and zirconium 2-4 pentanedionate, together with either zinc 2-4 pentane or zinc 2-4 pentanedionate in a 2-propanol solvent used in an amount sufficient to dissolve the reactants completely; and

(3) combing the mixtures formed in steps (1) and (2) at room temperature.

2. The method of Claim 1 and comprising the step of dissolving lithium 2-4 pentanedionate in methonol at room temperature and including the result in the combination at step (3).

3. The method of Claim 1 or 2, wherein step (1) comprises including in the mixture tributyl phosphate.

4. The method of Claim 1, 2 or 3, comprising the further step (4) of adding, at room temperature, nitric acid to the mixture formed in step (3) until the pH of the mixture is adjusted to a value in the range of about 3 to about 4.

5. The method of Claim 4, further comprising the step of adding water to the low-pH solution formed in step (4) to form a gel from the mixture.

6. The method of Claim 5, further comprising the step (5) of drying the gel to form a powder.

7. The method of Claim 6, further comprising the step (6) of grinding the powder formed in step (5).

8. The method of Claim 7, and comprising calcining the powder in several stages for a time sufficient to form a fine white glass powder.

9. The method of any one of the preceding claims wherein said mixture in step (2) further comprises tributyl phosphate.

10. A lithia-alumina-silica glass powder comprising particles ranging in size from about 40 to about 100 microns, having a distribution of pore radii ranging from approximately 15 to approximately 200 Angstroms, with the distribution peaking at about 80 Angstroms, and with said powder being substantially free of water and hydroxyl groups.

11. A method of producing a fine powder from a gel, comprising the steps of:

(a) making a wet gel;

(b) drying the gel in a recirculating air oven including a means for moisture to escape;

(c) dry milling the dried gel and retaining milled powder particles smaller than a predetermined size;

(d) calcining the powder particles from step (c) in a furnace with air flowing therethrough, according to a predetermined schedule of temperatures and times at said temperatures;

(e) wet milling a suspension of the calcined powder particles in a liquid of predetermined composition;

(f) drying the suspension of wet-milled powder particles; and

(g) removing hydroxyl groups from the powder resulting from step (f).

12. The method of Claim 11, wherein said gel in step (b) is placed in Teflon dishes.

13. The method of Claim 11 or 12, wherein said gel in step (b) is kept at about 105°C for approximately 8 hours.

14. The method of Claim 11, 12 or 13, wherein step (c) is carried out by ball milling using alumina cylinders about 2 cm long, for approximately 1 hour, and wherein particles of less than about 250 microns in diameter are retained using a sieve.

15. The method of any one of Claims 11 to 14, wherein step (d) further comprises stirring of said powder particles to insure uniform calcining.

16. The method of any one of Claims 11 to 15, wherein the powder particles in step (d) are kept in porcelain dishes.

17. The method of any one of Claims 11 to 15, wherein the powder particles in step (d) are kept in fused silica boats.

18. The method of any one of Claims 11 to 17, wherein said predetermined schedule in step (d) comprises:

(a') a linear increase from room temperature to approximately 300°C over a period of about 8 hours;

(b') maintenance of said 300°C temperature for about 24 hours;

(c') a linear increase from said 300°C to approximately 400°C over a period of about 12 hours.

(d') maintenance of said 400°C temperature for about 24 hours;

(e') a linear increase from said 400°C to approximately 600°C over a period of about 24 hours;

(f') maintenance of said 600°C temperature for about 12 hours; and

(g') a linear decrease from said 600°C to approximately room temperature over a period of about 12 hours or less.

19. A method of producing a fine powder from a gel, comprising the steps of:

(a) making a wet gel;

(b) supercritically drying said wet gel in a liquid of predetermined composition;

(c) wet milling a suspension of the dried gel in a liquid of predetermined composition;

(d) drying the suspension of wet-milled powder particles; and

(e) removing water and hydroxyl groups from the powder particles resulting from step (d).

20. The method of Claim 19, wherein said reaction vessel is filled with argon at a pressure of 3500 psi.

21. The method of Claim 20, wherein the temperature inside said reaction vessel is increased to about 440°C and held there for approximately 30 minutes, and then the reaction vessel is vented.

22. The method of any one of Claims 11 to 21, wherein the powder particles in the wet milling step are suspended in deionized water.

23. The method of any one of Claims 11 to 22, wherein the wet-milling comprises ball-milling for about 24 hours.

24. The method of Claim 23, wherein said ball-milling is done with alumina radius grinding media having diameters of about 1 cm.

25. The method any one of Claims 11 to 24, wherein the drying of said suspension of wet-milled powder particles is done in a spray dryer controlled to yield agglomerates in the range from about 40 to about 100 microns.

26. The method of any one of Claims 11 to 24, wherein the drying of said suspension of wet-milled powder particles is done by heating said powder particles in a Teflon dish at about 100°C.

27. The method of any one of Claims 11 to 24, wherein the drying of said suspension of wet-milled powder particles is done by freeze drying.

28. The method of 26 or 27 and further comprising the step of dry ball-milling the dried powder to deagglomerate any agglomerates formed to sizes ranging from about 40 to about 420 microns.

29. The method of Claim 28, wherein said sizes range from about 40 to about 100 microns.

30. The method of any one of Claims 11 to 29, wherein the step of removing hydroxyl groups is effected by heating said powder to about 600°C.

31. The method of any one of Claims 11 to 25, wherein said gel in step (a) is made by the method of Claim 5.

32. A method of producing a solid, near-net-shape glass-ceramic part, comprising the steps of:

(a) filling a mold with powder produced by the method of Claim 11 or 19;

(b) vibrating and tapping said mold to rearrange and pack said powder;

(c) sealing said mold; and

(d) applying a predetermined isostatic pressure to said mold for a predetermined length of time.

33. The method of Claim 32 wherein said mold comprises an elastic polymer material.

34. The method of Claim 33 wherein said elastic polymer material comprises neoprene.

35. The method of Claim 33 wherein said elastic polymer material comprises urethane.

36. The method of any one of Claims 32 to 35, wherein step (b) results in a packed powder density of at least 0.5 grams per cubic centimeter.

37. The method of any one of Claims 32 to 36, wherein said predetermined isostatic pressure applied in step (d) is in the range from about 45 to about 60 thousand pounds per square inch.

38. The method of any one of Claims 32 to 36, wherein said predetermined isostatic pressure applied in step (d) is held for approximately 2 minutes and reduced slowly over a period of about 30 minutes.

39. The method of any one of Claims 32 to 38, and further comprising the step of heat-treating the product of step (d) according to the following schedule:

(a′) a linear increase from room temperature to approximately 600°C over a period of about 10 hours;

(b′) maintenance of said 600°C temperature for about 2 hours;

(c′) a linear increase from said 600°C to approximately 850°C over a period of about 6 hours;

(d′) maintenance of said 850°C temperature for about 50 hours; and

(e′) a linear decrease from said 600°C to approximately room temperature over a period of about 16 hours.

40. The method of any one of Claims 32 to 39, wherein said powder comprises a lithia-alumina-silica glass powder.

41. The method of any one of Claims 32 to 39, wherein said powder comprises an alumina-silica glass powder.

EP 0 390 397 A2

# FIG. 1

```
┌─────────────────────────┐
│      MAKE WET GEL        │
└─────────────────────────┘
             │
             ▼
       ┌───────────┐
       │  DRY GEL  │
       └───────────┘
             │
             ▼
┌─────────────────────────────────┐
│  MILL DRIED GEL; RETAIN          │
│  PARTICLES SMALLER THAN A        │
│  PREDETERMINED SIZE              │
└─────────────────────────────────┘
             │
             ▼
┌─────────────────────────────────┐
│  CALCINE REMAINING PARTICLES     │
│  ACCORDING TO SPECIFIED SCHEDULE │
└─────────────────────────────────┘
             │
             ▼
┌─────────────────────────────────┐
│  WET-MILL A LIQUID SUSPENSION    │
│  OF CALCINED POWDER              │
└─────────────────────────────────┘
             │
             ▼
┌─────────────────────────────────┐
│  DRY THE WET-MILLED POWDER       │
└─────────────────────────────────┘
             │
             ▼
┌─────────────────────────────────┐
│  REDUCE PARTICLE AGGLOMERATE     │
│  SIZE IF NECESSARY               │
└─────────────────────────────────┘
             │
             ▼
┌─────────────────────────────────┐
│  REMOVE WATER AND HYDROXYLS      │
│  FROM POWDER PARTICLES           │
└─────────────────────────────────┘
```

FIG. 2

TEMP (°C)

TIME (hrs)

# FIG. 3

EP 0 390 397 A2

EP 0 390 397 A2

# FIG. 4

# FIG. 5

```
┌─────────────────────────┐
│     MAKE WET GEL         │
└─────────────────────────┘
            │
            ▼
┌─────────────────────────┐
│ SUPERCRITICALLY DRY THE GEL │
└─────────────────────────┘
            │
            ▼
┌─────────────────────────┐
│ WET-MILL A LIQUID SUSPENSION │
│   OF THE SUPERDRIED GEL  │
└─────────────────────────┘
            │
            ▼
┌─────────────────────────┐
│ DRY THE WET-MILLED POWDER │
└─────────────────────────┘
            │
            ▼
┌─────────────────────────┐
│ REDUCE PARTICLE AGGLOMERATE │
│    SIZE IF NECESSARY     │
└─────────────────────────┘
            │
            ▼
┌─────────────────────────┐
│ REMOVE WATER AND HYDROXYLS │
│   FROM POWDER PARTICLES  │
└─────────────────────────┘
```

# FIG. 6